# EUROPÄISCHE PATENTSCHRIFT

(11) **EP 3 093 392 B1**
(45) Veröffentlichungstag und Bekanntmachung des Hinweises auf die Patenterteilung: **22.11.2017**
(21) Anmeldenummer: 16157299.5
(22) Anmeldetag: 25.02.2016
(51) Int. Cl.: E02B 8/08

(54) **FISCHLIFT MIT SCHIEBER**
FISH LIFT WITH SLIDER
ASCENSEUR POUR POISSONS A GLISSIERE

(30) Priorität: 12.05.2015 DE 102015107387
(43) Veröffentlichungstag der Anmeldung: 16.11.2016
(73) Patentinhaber: Baumann, Georg, 88239 Wangen (DE)
(72) Erfinder: Baumann, Georg, 88239 Wangen (DE); Roth, Andreas, 76227 Karlsruhe (DE)
(74) Vertreter: Otten, Roth, Dobler & Partner mbB Patentanwälte

(56) Entgegenhaltungen:
- DE-A1-102014 001 825
- US-A- 2 119 540

## Beschreibung

Die Erfindung betrifft einen Fischlift gemäß dem Oberbegriff des Anspruchs 1.

Aus der DE 10 2014 001 825 A1 ist ein Fischlift zum Transport von Fischen zwischen einem Oberwasser einer Staustufe und einem Unterwasser der Staustufe bekannt, wobei der Fischlift einen Schacht und einen Behälter umfasst, wobei der Schacht eine in das Oberwasser führende obere Öffnung mit einem durch einen oberen Schieber verschließbaren oberen Schleusenausgang umfasst, wobei der Schacht eine in das Unterwasser führende untere Öffnung mit einem unteren Schleuseneingang umfasst, wobei der Behälter zwischen einer oberen Stellung und einer unteren Stellung verfahrbar ist und wenigstens eine seitliche Öffnung umfasst und wobei der Behälter als Schwimmbehälter ausgebildet ist, welcher seine Stellungen im Schacht in Abhängigkeit von einem im Schacht vorhandenen Schachtwasserstand einnimmt.

Der Erfindung liegt die Aufgabe zugrunde, einen Fischlift vorzuschlagen, bei welchem unabhängig von einem sich um mehrere Meter unterscheidenden Wasserstand des Oberwassers immer ein oberflächennaher Ein- und Ausstieg von Fischen aus dem Oberwasser in den Behälter und aus dem Behälter in das Oberwasser möglich ist.

Diese Aufgabe wird ausgehend von den Merkmalen des Oberbegriffs des Anspruchs 1 durch die kennzeichnenden Merkmale des Anspruchs 1 gelöst. In den Unteransprüchen sind vorteilhafte und zweckmäßige Weiterbildungen angegeben.

Der erfindungsgemäße Fischlift umfasst eine Blende und Bewegungsmittel zur Bewegung der Blende, wobei die obere Öffnung des Schachts durch die Blende wenigstens teilweise verschließbar ist, wobei die Blende von den Bewegungsmitteln vertikal verfahrbar ist, wobei die Blende einen Durchbruch umfasst, wobei der Durchbruch auf die seitliche Öffnung des Behälters derart angepasst ist, dass immer dann, wenn der Durchbruch und die seitliche Öffnung des Behälters aufeinander ausgerichtet sind, Fische durch einen durch den Durchbruch und die Öffnung gebildeten Kanal schwimmen können, wobei die obere Öffnung des Schachts eine derartige Höhe aufweist, dass sich diese bei in einer hohen oberen Stellung stehendem Behälter bis unter eine Unterseite des Behälters erstreckt, wobei die Blende abhängig von einem Wasserstand des Oberwassers zwischen einer Hochwasserstellung und einer Niedrigwasserstellung verfahrbar ist und wobei die Blende mit einer Höhe derart auf die obere Öffnung des Schachts angepasst ist, dass diese auch in ihrer Hochwasserstellung, bei welcher der Behälter in seine hohe obere Stellung verfahrbar ist nach unten derart über den in seiner hohen oberen Stellung stehenden Behälter übersteht, dass die obere Öffnung des Schachts durch die Blende zu einem Innenraum des Schachts verschlossen ist, so dass das Oberwasser von dem Innenraum des Schachts abgeschottet ist. Hierdurch ist es möglich unabhängig von einem Wasserstand des Oberwassere einen oberflächennahen Ein- und Ausstieg von Fischen aus dem Oberwasser in den Behälter und aus dem Behälter in das Oberwasser zu ermöglichen. Kern der Erfindung ist eine relativ zu der oberen Öffnung des Schachts verfahrbare Blende, welche die obere Öffnung des Schachts im erforderlichen Umfang zu einem Innenraum des Schachts abschottet.

Es ist auch vorgesehen, die Blende zwischen dem Behälter und einer Innenwand des Schachts anzuordnen. Hierdurch ist die Blende für Wartungsarbeiten einfach vom Schacht her zugänglich.

Es ist auch vorgesehen, die Blende an einer Außenwand des Schachts anzuordnen. Hierdurch ist es einfach möglich die Funktionsweise der Blende zu beobachten und Funktionsstörungen zu erkennen.

Es ist auch vorgesehen, die Blende in einer Wandung des Schachts anzuordnen und zu führen. Bei einer derartigen Ausbildung ist ein besonders kompakter Aufbau des Fischlifts möglich, da die Blende weder den Einbauraum für den Behälter noch den Einbauraum für den oberen Schieber beeinträchtigt.

Weiterhin ist es vorgesehen, die Blende an wenigstens einer Schiene zu führen. Hierdurch kann der Schiene eine genaue Verfahrbewegung vorgegeben werden, so dass ein ungewünschtes Verkanten verhindert ist. Weiterhin ist es vorgesehen, die Blende in dem Bereich, in welchem die Blende auch dem Druck des Oberwassers Stand halten muss, zu führen, um eine zuverlässige Abschottung des Innenraums des Schachts gegen das Oberwasser zu erreichen.

Es ist auch vorgesehen, durch die Blende einen Anschlag für den Behälter zu bilden, welcher den Behälter an einer weiteren Hubbewegung hindert. Hierdurch ist es möglich, mit einfachen Mitteln, die jeweils oberste Position des Behälters durch die Stellung der Blende zu bestimmen und so den Behälter auf die Blende auszurichten und sicher zu stellen, dass di seitliche Öffnung des Behälters auf den Durchbruch der Blende ausgerichtet ist.

Weiterhin ist es vorgesehen, dass das Bewegungsmittel einen in Abhängigkeit vom Stand des Oberwassers gesteuerten Aktor umfasst, welcher die Blende mit einem steigenden Niveau des Oberwassers anhebt und mit einem fallenden Niveau des Oberwassers absenkt. Durch eine Ausrichtung der Blende am Niveau des Oberwassers ist mit einfachen Mitteln die richtige Stellung der Blende sichergestellt.

Weiterhin ist es vorgesehen, den Aktor als elektrisch oder pneumatisch oder hydraulisch angetriebenen Zylinder auszubilden und das Bewegungsmittel mit einem Sensor zur Erfassung des Niveaus des Oberwassers sowie einer Kontrolleinrichtung auszustatten. Auf diese Weise lässt sich die Blende sicher steuern und auch elektronisch einfach überwachen.

Schließlich sieht die Erfindung vor, den Aktor als Schwimmer auszubilden, wobei das Bewegungsmittel auch ein mit der Blende verbundenes Gestänge umfasst, mittels welchem die Blende mit dem Schwimmer bewegbar ist. Durch eine derartige mechanische Koppelung zwischen Aktor und Blende ist eine hohe Zuverlässigkeit des Bewegungsmittels gesichert. Hierbei ist es vorgesehen, die Stellung des Aktors und die Stellung der Blende und den Wasserstand bzw. das Niveau des Oberwassers mittels Sensoren zu überwachen.

Weitere Einzelheiten der Erfindung werden in der Zeichnung anhand von schematisch dargestellten Ausführungsbeispielen beschrieben.

Weitere Einzelheiten der Erfindung werden anhand der schematischen Zeichnung beschrieben.

Hierbei zeigen:
- Figur 1 und 2:: schematische Ansichten eines Fischlifts in zwei verschiedenen Stellungen und
- Figur 3 bis 6:: schematische Ansichten eines erfindungsgemäßen Fischlifts in verschiedenen Stellungen.

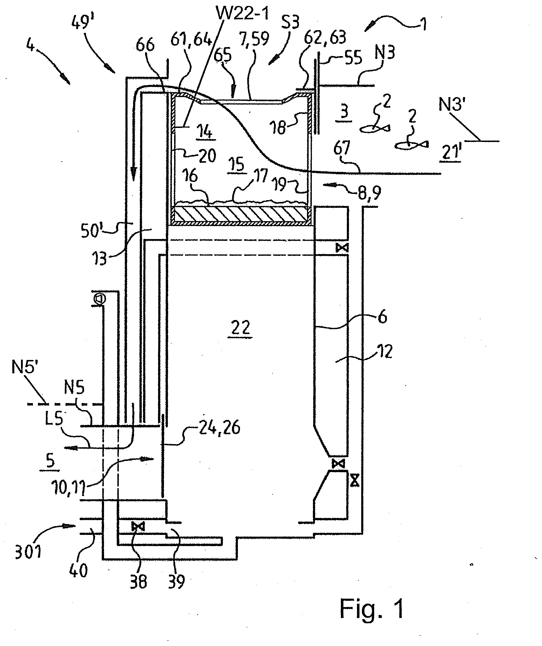

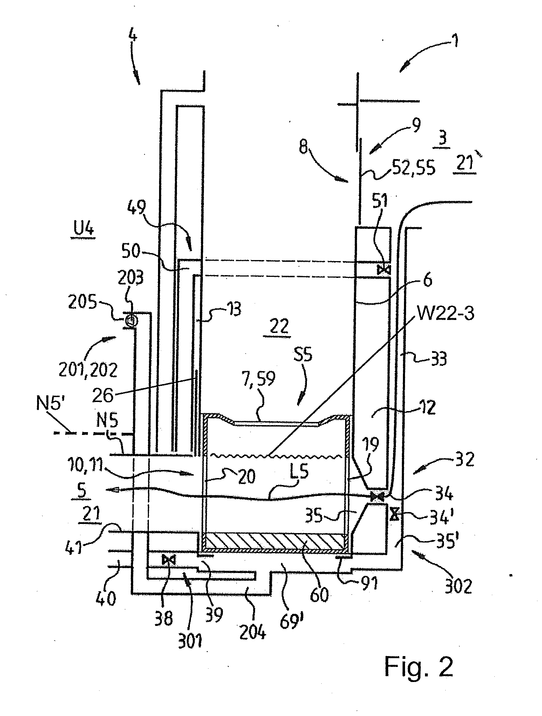

Anhand der Figuren 1 und 2 werden die Bauteile und wird die Funktionsweise eines Fischlifts grundsätzlich erläutert. Die Figuren 1 und 2 zeigen einen Fischlift 1, bei welchem ein Unterwasser 5 auf einem Niveau N5 steht, wobei der Fischlift 1 bzw. eine Staustufe 4, in welche der Fischlift 1 integriert ist, in schematischen, geschnittenen Seitenansichten dargestellt ist.

Der Fischlift 1 ist zum Transport von Fischen 2 zwischen einem Oberwasser 3 der Staustufe 4 und dem Unterwasser 5 der Staustufe 4 vorgesehen. Der Fischlift 1 umfasst einen Schacht 6 und einen Behälter 7. Hierbei umfasst der Schacht 6 eine unter einem Niveau N3 des Oberwassers 3 liegende obere Öffnung 8 mit einem oberen Schleusenausgang 9. Weiterhin umfasst der Schacht 6 eine unter dem Niveau N5 des Unterwassers 5 liegende untere Öffnung 10 mit einem unteren Schleuseneingang 11. Der Behälter 7 ist zwischen einer in der Figur 1 gezeigten oberen Stellung S3 und einer in der Figur 2 gezeigten unteren Stellung S5 verfahrbar. In dem Schacht 6 ist der Behälter 7 an zwei sich gegenüber liegenden Schienen 12, 13 geführt. Der Behälter 7, welcher in der Figur 1 in seiner oberen Stellung S3 gezeigt ist, ist derart geformt, dass dieser die beiden Schienen 12 , 13 umgreift. Der Behälter 7 umfasst einen Transportraum 14. Der Transportraum 14 bildet ein Becken 15. Das Becken 15 weist einen Beckenboden 16 auf, auf welchem Sohlsubstrat 17 angeordnet ist. Hierdurch stellt das Becken 15 für die Fische 2 und andere Lebewesen eine weitgehend natürliche Umgebung dar. In seiner Wandung 18 weist der Behälter 7 eine erste seitliche Öffnung 19 und eine zweite seitliche Öffnung 20 auf, welche in den Transportraum 14 führen. Hierbei ist die Öffnung 19 des Behälters 7 auf die obere Öffnung 8 des Schachts 6 ausgerichtet, wenn der Behälter 7 in seiner oberen Stellung S3 steht und hierbei ist die Öffnung 20 des Behälters 7 auf die untere Öffnung 10 des Schachts 6 ausgerichtet, wenn der Behälter 7 in seiner unteren Stellung S5 steht. Wie aus der Figur 2 ersichtlich ist, liegt die zweite seitliche Öffnung 20 in der unteren Stellung S5 des Behälters 7 unter dem Niveau N5 des Unterwassers 5 und führt in das Unterwasser 5 bzw. in eine Einschwimmzone 21. Die zweite seitliche Öffnung 20 des Behälters 7 liegt in dessen unterer Stellung dem Schleuseneingang 11 und der unteren Öffnung 10 des Schachts 6 derart gegenüber, dass bei geöffnetem Schleuseneingang 11 eine gegenüber dem den Behälter 7 umgebenden Innenraum 22 des Schachts 6 abgeschirmte Verbindung zum Unterwasser 5 besteht. Der Schleuseneingang 11 ist in der zweiten Schiene 13 ausgebildet, wobei diese zweite Schiene 13 eine auf die Öffnung 20 des Behälters 7 ausgerichtete untere Schienenöffnung 13a aufweist. Hierbei umfasst der Schleuseneingang 11 die Öffnung 10, welche als Rohrabschnitts ausgeführt ist, ein Sperrglied 24 und ein nicht dargestelltes Betätigungsmittel für das Sperrglied 24. Das Sperrglied 24 ist als Schieber 26 ausgebildet und das nicht dargestellte Betätigungsmittel umfasst Aktuatoren und ein Gestänge. In der Figur 2 steht der Schieber 26 in einer hochgezogenen Stellung, so dass für die Fische 2 der Weg zwischen dem Unterwasser 5 und dem Transportraum 14 des Behälters 7 freigegeben ist. Das Sperrglied 24 und das nicht dargestellte Betätigungsmittel des Schleuseneingangs 11 sind in einem nicht dargestellten Hohlraum der zweiten Schiene 13 angeordnet und liegen somit geschützt in dem Schacht 6. In dem Transportraum 14 des Behälters 7 und in der Einschwimmzone 21 des Unterwassers 5 wird bei in der unteren Stellung S5 stehendem Behälter 7 und offenem Schleuseneingang 11 eine Leitströmung L5 über eine erste Leitwasserversorgung 32 hergestellt. Die erste Leitwasserversorgung 32 umfasst einen Versorgungskanal 33, ein Versorgungskanalventil 34 und eine Leitwasserdüse 35. Der Versorgungskanal 33 wird aus dem Oberwasser 3 gespeist, wobei die durch den Versorgungskanal 33 zuströmende Wassermenge durch das Versorgungskanalventil 34 geregelt wird. Die Leitwasserdüse 35 liegt der ersten seitlichen Öffnung 19 des Behälters 7 gegenüber, wenn dieser in seiner unteren Stellung S5 steht. Durch die Leitwasserdüse 35 strömt aus dem Oberwasser 3 Wasser als Leitströmung L5 in den Transportraum 14 des Behälters 7 und durch dessen zweite Öffnung 20 und den geöffneten Schleuseneingang 11 weiter in das Unterwasser 5 bzw. die Einschwimmzone 21.

Der Fischlift 1 umfasst weiterhin noch eine Ablasseinrichtung 301. Diese umfasst eine Ablassschleuse 38, durch welche eine in dem Schacht 6 ausgebildete Ablassöffnung 39 verschließbar ist. Die Ablassöffnung 39 ist unterhalb der unteren Öffnung 10 angeordnet und führt in einen Ablass- und Spülkanal 40, welcher unter einem Boden 41 der Einschwimmzone 21, vorbei an der Einschwimmzone 21 in das Unterwasser 5 führt. Solange der Behälter 7 in der unteren Stellung S5 steht, ist ein Öffnen der Ablassschleuse 38 allenfalls dann vorgesehen, wenn der Versorgungskanal 33 durchgespült werden muss. In einem derartigen Fall wird dann ein Ventil 34' geöffnet und Oberwasser aus dem Versorgungskanal 33 über eine Umleitung 35' unter den Behälter 7 geleitet. Hierdurch ist eine Spüleinrichtung 302 gebildet, durch welche an der Leitwasserdüse 35 vorbei Oberwasser unter dem Behälter 7 abströmen kann, ohne dass die im Behälter 7 und in der Einschwimmzone 21 ausgebildete Leitströmung L5 dadurch beeinträchtigt wird.

Der Fischlift 1 umfasst weiterhin eine zweite Leitwasserversorgung 49. Diese umfasst einen Versorgungskanal 50, welcher aus dem Oberwasser 3 gespeist wird, und ein Versorgungskanalventil 51. Der Versorgungskanal 50 der zweiten Leitwasserversorgung 49 mündet vor dem unteren Schleuseneingang 11 in die Einschwimmzone 21 des Unterwassers 5. In der in der Figur 2 gezeigten unteren Stellung S5 des Behälters 7 ist das Versorgungskanalventil 51 geschlossen, so dass durch die zweite Leitwasserversorgung 49 kein Oberwasser 3 in das Unterwasser 5 geleitet wird. Die zweite Leitwasserversorgung 49 wird aktiviert, wenn der Schleuseneingang 11 verschlossen ist, um die Lockströmung im Unterwasser 5 aufrecht zu erhalten. Wie aus der Figur 2 weiter hervorgeht ist der Schleusenausgang 9 verschlossen, wenn der Behälter 7 in der unteren Stellung S5 steht oder in die untere Stellung fährt. Der Schleusenausgang 9 umfasst ein Sperrglied 52 und nicht dargestellte Betätigungsmittel, wobei seine Öffnung 8 durch einen Rohrabschnitt gebildet ist, welcher das Oberwasser 3 durch eine auf die obere Öffnung 8 des Schachts 6 und auf die Öffnung 19 des in der oberen Stellung S3 stehenden Behälters 7 ausgerichtete obere Schienenöffnung mit dem Innenraum 22 des Schachts 6 verbindet. Das Sperrglied 52 ist als Schieber 55 ausgebildet und die nicht dargestellten Betätigungsmittel sind durch nicht dargestellten Aktuatoren und ein nicht dargestelltes Gestänge gebildet. Durch den geschlossenen Schleusenausgang 9 wird das Einströmen von Oberwasser 3 in den Innenraum 22 des Schachts 6 verhindert. Der Behälter 7 ist als Schwimmbehälter 59 ausgebildet und umfasst einen Schwimmkörper 60. Hierdurch erhält der Behälter 7 bei in dem Innenraum 22 des Schachts 6 steigendem Wasserstand derart starken Auftrieb, dass dieser an den Schienen 12, 13 geführt aus seiner unteren Stellung S5 aufschwimmt und mit steigendem Wasserstand im Schacht 6 aus der in der Figur 2 gezeigten unteren Stellung S5 in die in der Figur 1 gezeigte obere Stellung S3 bewegt wird. Hierbei wird ein steigender Wasserstand in dem Schacht 6 dadurch erzeugt, dass der untere Schleuseneingang 11 durch den Schieber 26 geschlossen wird und weiterhin über die erste Leitwasserversorgung 32 und/oder über die Spüleinrichtung 302 Oberwasser 3 zugeleitet wird, wobei die Ablasseinrichtung 301 geschlossen bleibt. Eine Lockströmung L5 in der Einschwimmzone 21 wird dann über die zweite Leitwasserversorgung 49 aufrechterhalten. Sobald der Behälter 7 in der in der Figur 1 gezeigten oberen Stellung S3 steht, erfolgt eine Aufrechterhaltung der Lockströmung 21 im Unterwasser 5 zusätzlich oder alternativ auch über eine dritte Leitwasserversorgung 49', welche aus dem Behälter 7 überströmendes Oberwasser 3 durch einen Versorgungskanal 50' dem Unterwasser 5 im Bereich der Einschwimmzone 21 zuleitet.

Die obere Stellung S3 hat der Behälter 7 - wie in der Figur 1 gezeigt - erreicht, wenn der schwimmende Behälter 7 mit seiner Oberseite 61 gegen ein den Schacht 6 nach oben begrenzendes Rückhaltemittel 62, welches als Anschlag 63 ausgebildet ist, anschwimmt und durch dieses an einer weiteren, nach oben gerichteten Hubbewegung gehindert wird. Sobald der Behälter 7 an dem Anschlag 63 anliegt kann der obere Schleusenausgang 9 geöffnet werden, so dass Oberwasser 3 in den Transportraum 14 des Behälters 7 einströmt. Eine Decke 64 des Behälters 7, welche die Oberseite 61 bildet, weist eine dritte Öffnung 65 auf, durch welche der Transportraum 14 des Behälters 7 von oben zugänglich ist. Da der Behälter 7 durch den Anschlag 63 mit seiner Oberseite 61 unterhalb des Niveaus N3 des Oberwassers 3 gehalten wird, quillt Oberwasser 3, welches durch den oberen Schleusenausgang 9 in den Transportraum 14 einströmt durch die Öffnung 65 nach oben aus dem Behälter 7 heraus. Das überquellende Oberwasser 3 fließt über eine Oberkante 66 des Schachts 6 und wird der dritten Leitwasserversorgung 49' zugeführt. Hierdurch stellt sich in dem Transportraum 14 nach dem Öffnen des Schleusenausgangs 9 eine von einer Ausschwimmzone 21' des Oberwassers 3 ausgehende obere Leitströmung 67 ein, durch welche die Fische 2 aus dem Transportraum 14 heraus in das Oberwasser 3 geleitet werden bzw. aus dem Oberwasser 3 in den Transportraum 14 geleitet werden. Solange der Behälter 7 in seiner oberen Stellung S3 steht, wird die Lockströmung L5 im Unterwasser 5 durch die zweite und/oder die dritte Leitwasserversorgung 49 bzw. 49' aufrechterhalten.

Bei Bedarf ist es vorgesehen, das Versorgungskanalventil 34 oder das Ventil 34' der Spüleinrichtung 302 leicht geöffnet zu halten, um Leckverluste am unteren Schleuseneingang 11 oder an der Ablassschleuse 38 zu kompensieren und den Behälter 7 konstant an dem Anschlag 63 zu halten.

Bei durchschnittlichem Wasserstand N5 des Unterwassers 5 bleibt eine Zusatzeinrichtung 201 des Fischlifts 1 außer Betrieb. Diese Zusatzeinrichtung 201 ist als Pumpeinrichtung 202 ausgebildet, welche als Wasserabflusseinrichtung und/oder als Wasserzuflusseinrichtung arbeitet, und umfasst eine mechanische Pumpe 203, eine erste Leitung 204 zur Verbindung der Pumpe 203 mit dem Schacht 6 und eine zweite Leitung 205 zur Verbindung der Pumpe 203 mit einer Umgebung U4 der Staustufe 4. Hierbei mündet die erste Leitung 204 in einem Bodenbereich 69' des Schachts 6 in den Schacht 6 und hierbei mündet die zweite Leitung 205 außerhalb der Einschwimmzone 21 bzw. Ausschwimmzone 21' in die Umgebung U4 und insbesondere in das Unterwasser 5 oder in das Oberwasser 3.

Bei durchschnittlichem Wasserstand N5 des Unterwassers 5 oder bei einem unter dem durchschnittlichen Wasserstand N5 liegenden Wasserstand des Unterwassers 5 sinkt der Behälter 7 beim Ablassen von in dem Innenraum 22 des Schachts 6 enthaltenen Wasser bis auf untere Anschlagmittel 91 ab, so dass dessen seitliche Öffnung 20 auf die untere Öffnung 10 des Schachts 6 ausgerichtet ist.

Bei erhöhtem Wasserstand N5' des Unterwassers, wie dieser in der Figur 1 angedeutet ist, ist es mittels der aus Ablassöffnung 39, Ablassschleuse 38 und Ablasskanal 40 bestehenden Ablasseinrichtung 301 nicht möglich, den Behälter 7 in dem Schacht 6 bis auf die unteren Anschlagmittel 91 abzusenken, da ein Schachtwasserstand über die Ablasseinrichtung 301 und/oder über die untere Öffnung 10 des Schachts 6 nur bis auf das Niveau N5' absenkbar ist. Entsprechend wird zum Absenken des Schachtwasserstands dann die Pumpe 203 aktiviert und mit deren Hilfe der Schachtwasserstand W22-3 unter das Niveau N5' soweit abgesenkt, dass der Behälter 7 die Stellung S5 einnimmt. Umgekehrt wird bei einem unter dem Niveau N3 liegenden Oberwasserstand N3' (siehe Figur 2) die Pumpe 203 so betrieben, dass diese so viel Wasser in den Schacht 6 fördert, dass ein Schachtwasserstand W22-1 erreicht wird und hierdurch der Behälter 7 in die in der Figur 1 gezeigte Stellung S3 anhoben und in dieser gehalten wird. Selbstverständlich treten in dieser Situation dadurch Leckverluste auf, dass Wasser aus dem Schacht 6 durch dessen obere Öffnung 8 in das Oberwasser 3 abströmt.

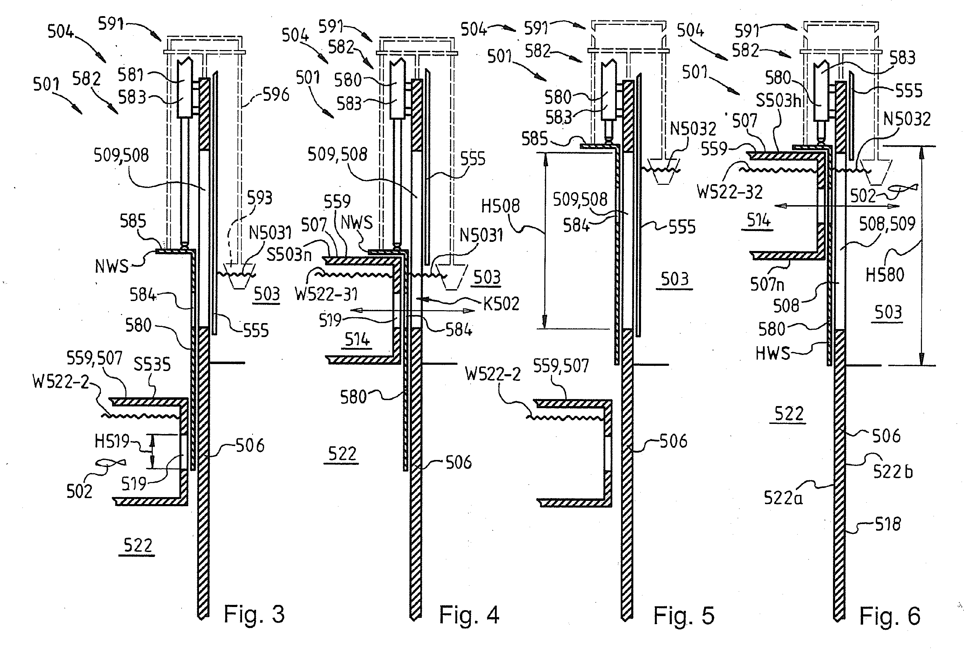

In den Figuren 3 bis 6 ist eine Ausführungsform eines erfindungsgemäßen Fischlifts 501 in unterschiedlichen Stellungen bei Niedrigwasserstand N5031 eines Oberwassers 503 und bei Hochwasserstand N5032 des Oberwassers 503 in schematischen Darstellungen gezeigt. Grundsätzlich weist der in den Figuren 3 bis 6 schematisch dargestellte Fischlift 501 auch die Funktionen und Merkmale des in den Figuren 1 und 2 gezeigten Fischlifts auf. Der in den Figuren 3 bis 6 gezeigte Fischlift 501 unterscheidet sich von dem in den Figuren 1 und 2 gezeigten Fischlift prinzipiell dadurch, dass dieser einen Schacht 506 mit einer oberen Öffnung 508 aufweist, welche einen Höhe H508 aufweist, die größer ist als eine Höhe H519 einer ersten seitlichen Öffnung 519 eines Behälters 507. Der in den Figuren 3 bis 6 gezeigte Fischlift 501 unterscheidet sich von dem in den Figuren 1 und 2 gezeigten Fischlift prinzipiell weiterhin dadurch, dass dieser eine Blende 580 und Bewegungsmittel 581 zum vertikalen Verfahren der Blende 580 umfasst. Hierbei bilden die Blende 580 und die Bewegungsmittel 581 neben einem Schieber 555, welcher die obere Öffnung 508 des Schachts 506 vollständig verschließen und öffnen kann, eine weitere Verschlusseinrichtung 582. Analog zu der Darstellung der Figuren 1 und 2 ist bei der in den Figuren 3 bis 6 gezeigten Ausführungsvariante ebenfalls ein Ausstieg von Fischen 502 in ein nicht dargestelltes Unterwasser vorgesehen. Hierzu weist der Behälter 507 eine der seitlichen Öffnung 519 gegenüberliegende, nicht dargestellte Öffnung auf. Die Höhe der oberen Öffnung H508 beträgt bei einer Ausbildung des Fischlifts 501 für eine Speicherbecken bzw. einen Speichersee z.B. 2 bis 6 Meter.

In der Figur 3 ist im Vergleich mit den Figuren 1 und 2 etwa ein rechtes oberes Viertel des Fischlifts 501 gezeigt. Hierbei ist der Fischlift 501 der ebenfalls zum Transport von Fischen 502 zwischen dem Oberwasser 503 einer Staustufe 504 und einem nicht dargestellten Unterwasser der Staustufe 504 vorgesehen ist, in geschnittener Seitenansicht gezeigt. Von dem Fischlift 501 sind im Wesentlichen der Schacht 506 und der Behälter 507 sichtbar, wobei der Behälter 507 in einer Zwischenstellung S535 bei einem mittleren Schachtwasserstand W522-2 steht. Der Schacht 506 umfasst die in das Oberwasser 503 führende obere Öffnung 508, welche einen durch den oberen Schieber 555 verschließbaren oberen Schleusenausgang 509 bildet. Ebenso umfasst der Schacht 506 eine in das Unterwasser führende untere Öffnung mit einem unteren Schleuseneingang, wie dies analog in den Figuren 1 und 2 gezeigt ist. Der Behälter 507 ist zwischen einer hohen oberen Stellung S503h (siehe Figur 6) bzw. einer niedrigen oberen Stellung S503n, in welcher dieser mit seiner Öffnung 519 auf die obere Öffnung 508 des Schachts 506 ausgerichtet ist, und einer nicht dargestellten unteren Stellung, in welcher dieser mit seiner Öffnung 520 auf eine untere Öffnung des Schachts 506 ausgerichtet ist, verfahrbar. Der Behälter 507 ist als Schwimmbehälter 559 ausgebildet, welcher seine Stellungen S503h, S503n bzw. S535 im Schacht 506 in Abhängigkeit von einem im Schacht 506 vorhandenen Schachtwasserstand W522-2 bzw. W522-31 bzw. W522-32 einnimmt. Hierbei ist neben dem in den Figuren 3 und 5 gezeigten mittleren Schachtwasserstand W522-2 in der Figur 4 der niedrige obere Schachtwasserstand W522-31 und in der Figur 6 hohe obere Schachtwasserstand W522-32 gezeigt. Der niedrige obere Schachtwasserstand W522-31 entspricht dem Niedrigwasserstand N5031 des Oberwassers 503 und der hohe obere Schachtwasserstand W522-32 entspricht dem Hochwasserstand N5032 des Oberwassers 503. Die obere Öffnung 508 des Schachts 506 ist durch die Blende 580 wenigstens teilweise verschließbar wie dies die Figuren 3 bis 6 zeigen.

In den Figuren 3 bis 6 ist als Bewegungsmittel 581 ein Pneumatikzylinder 583 gezeigt, welcher von einer nicht dargestellten Regeleinrichtung, welche einen nicht dargestellten Sensor umfasst und mit diesem den Wasserstand des Oberwassers 503 erfasst, in Abhängigkeit von dem Wasserstand des Oberwassers 503 vertikal verfahrbar ist. Die Blende 580 umfasst hierbei einen Durchbruch 584, welcher mit der seitlichen Öffnung 519 des Behälters 507 deckungsgleich ist. Die Blende 580 umfasst auch einen Anschlag 585, welcher an der Blende 580 derart positioniert ist, dass dieser den Behälter 507 in seiner Aufwärtsbewegung stoppt, wenn dessen seitliche Öffnung 519 auf den Durchbruch 584 der Blende 580 ausgerichtet ist. Dies ist in den Figuren 4 und 6 bei Niedrigwasserstand N5031 und bei Hochwasserstand N5032 gezeigt. Als Alternative zu dem Bewegungsmittel 581 ist mit gestrichelten Linien noch ein zweites Bewegungsmittel 591 dargestellt. Dieses Bewegungsmittel 591 umfasst als Aktor einen Schwimmer 593, welcher mittels eines Gestänges 596 die Blende 580 in Abhängigkeit von einem Wasserstand des Oberwassers 503 hebt und senkt. In den Figuren 5 und 6 ist das Gestänge 596 durchgeschnitten und nur teilweise dargestellt.

Die Figuren 3 und 4 zeigen das Oberwasser 503 bei einem Niedrigwasserstand N5031. Entsprechend steht die Blende 580 in einer Niedrigwasserstellung NWS. Durch Zufluss von Oberwasser 503 in einen Innenraum 522 des Schachts 506 steigt der Schachtwasserstand von einem mittleren Schachtwasserstand W522-2 auf einen niedrigen oberen Schachtwasserstand W522-31 an, bei welchem der Behälter 507 bis an den Anschlag 585 der Blende 580 gehoben ist (siehe Figur 4). Sobald der Behälter 507 in seiner niedrigen oberen Stellung S503n angekommen ist, kann der obere Schieber 555 geöffnet werden, so dass - wie in der Figur 4 gezeigt - durch den Durchbruch 584 der Blende 580 und durch die seitliche Öffnung 519 des Behälters 507 hindurch Fische 502 aus dem Oberwasser 503 in einen Transportraum 514 des Behälters 507 und von dem Transportraum 514 in das Oberwasser 503 schwimmen können. Hierbei bilden die seitliche Öffnung 519 und der Durchbruch 584 einen Kanal K502.

Analog zu den Figuren 3 und 4 zeigt eine Betrachtung der Figuren 5 und 6 wie der Behälter 507 bei einem Hochwasserstand N5032 des Hochwassers 503 aus seiner Zwischenstellung S535 in die hohe obere Stellung S503h angehoben wird. Hierbei steht die Blende 580 bei einem Hochwasserstand N5032 in einer Hochwasserstellung HWS. Die Blende 580 wird bei steigendem Oberwasser 503 von dem Bewegungsmittel 581 oder dem alternativ zum Einsatz kommenden Bewegungsmittel 591 automatisch aus ihrer Niedrigwasserstellung NWS in ihre Hochwasserstellung HWS angehoben. Die Höhe H508 der oberen Öffnung 508 des Schachts 506 ist so groß, dass sich diese bei in einer hohen oberen Stellung S503h stehendem Behälter 507 bis unter eine Unterseite 507u des Behälters 507 erstreckt. Hierbei ist die Blende 580 mit einer Höhe H580 derart auf die Höhe H580 der oberen Öffnung 508 des Schachts 506 angepasst, dass diese auch in ihrer Hochwasserstellung HWS (siehe Figur 6), bei welcher der Behälter 507 in seine hohen oberen Stellung S503h verfahrbar ist, nach unten derart über den in seiner hohen oberen Stellung S503h stehenden Behälter 507 übersteht, dass die obere Öffnung 508 des Schachts 506 durch die Blende 580 zu dem Innenraum 522 des Schachts 506 verschlossen ist, so dass das Oberwasser 503 von dem Innenraum 522 des Schachts 506 durch die Blende 580 abgeschottet ist. Die Blende 580 ist zwischen einer Innenwand 522a des Schachts 506 und dem Behälter 507 angeordnet. Die Blende 580 ist somit derart bemessen, dass diese den unter dem Behälter 507 liegenden Teil des Innenraums 522 des Schachts 506 in jeder Betriebsstellung zu dem Oberwasser 503 hin abdichtet. Die Blende 580 verhindert somit, dass Oberwasser 503 durch die obere Öffnung 508 des Schachts 506 direkt in den unter dem Behälter 507 liegenden Teil des Innenraums 522 des Schachts 506 eintritt.

Um die obere Öffnung 508 des Schacht 506 auch bei Niedrigwasser N5031 des Oberwassers 503 bis auf den in der Blende 580 vorhandenen Durchbruch 584 geschlossen zu halten, ist es gemäß einer nicht dargestellten Ausführungsvariante vorgesehen, dass sich die Blende über ihren Anschlag hinweg soweit nach oben erstreckt, dass die Öffnung 508 durch die Blende 580 auch in der Niedrigwasserstellung NWS der Blende 580 verschlossen ist. Hierdurch lässt sich auf einfache Weise verhindern, dass beispielsweise Wasservögel bei Niedrigwasser N5031 und geöffnetem oberen Schieber 555 in den Innenraum 522 des Schachts 506 einfliegen.

Gemäß einer nicht dargestellten Ausführungsvariante ist die Blende in einer Wandung 518 des Schachts 506 geführt.

Gemäß einer anderen, nicht dargestellten Ausführungsvariante ist es auch vorgesehen, die Blende an einer Außenwand 522b des Schachts 502 anzuordnen.

### Bezugszeichenliste:

- 501: Fischlift
- 502: Fisch
- 503: Oberwasser
- 504: Staustufe

- 506: Schacht
- 507: Behälter
- 507u: Unterseiten von 507
- 508: Öffnung von 506
- 509: oberer Schleusenausgang

- 514: Transportraum von 507

- 518: Wandung von 506
- 519: seitliche Öffnung von 207

- 522: Innenraum von 506
- 522a: Innenwand von 506
- 522b: Außenwand von 506

- 555: oberer Schieber

- 559: Schwimmbehälter

- 580: Blende
- 581: Bewegungsmittel
- 582: Verschlusseinrichtung aus 580 und 581
- 583: Pneumatikzylinder als 581
- 584: Durchbruch von 580
- 585: Anschlag von 580

- 591: zweites Bewegungsmittel

- 593: Schwimmer

- 596: Gestänge
- H508: Höhe von 508
- H519: Höhe von 519
- H580: Höhe von 580
- HWS: Hochwasserstellung von 580

- K502: Kanal

- NWS: Niedrigwasserstellung von 580
- N5031: Niedrigwasserstand von 503
- N5032: Hochwasserstand von 503

- S535: Zwischenstellung von 507
- S503h: hohe obere Stellung von 507
- S503n: niedrige obere Stellung von 507

- W522-2: mittlerer Schachtwasserstand
- W522-31: niedriger oberer Schachtwasserstand
- W522-32: hoher oberer Schachtwasserstand

## Patentansprüche

1. Fischlift (501; 1) zum Transport von Fischen (502; 2) zwischen einem Oberwasser (503; 3) einer Staustufe (504; 4) und einem Unterwasser der Staustufe (504; 4) umfassend
- einen Schacht (506; 6) und einen Behälter (507; 7),
- wobei der Schacht (506; 6) eine in das Oberwasser (503; 3) führende obere Öffnung (508; 8) mit einem durch einen oberen Schieber (555; 55) verschließbaren oberen Schleusenausgang (509; 9) umfasst,
- wobei der Schacht (506; 6) eine in das Unterwasser (5) führende untere Öffnung (10) mit einem unteren Schleuseneingang (11) umfasst,
- wobei der Behälter (507; 7) zwischen einer oberen Stellung (S503h, S503n; S3) und einer unteren Stellung (S5) verfahrbar ist und wenigstens eine seitliche Öffnung (519; 19) umfasst und
- wobei der Behälter (507; 7) als Schwimmbehälter (559; 59) ausgebildet ist, welcher seine Stellungen (S503h, S503n, S535; S3, S5, S35) im Schacht (506; 6) in Abhängigkeit von einem im Schacht (506; 6) vorhandenen Schachtwasserstand (W522-2, W522-31, W522-32; W22-1, W22-2, W22-3) einnimmt,
**dadurch gekennzeichnet,**
- **dass** der Fischlift eine Blende (580) und Bewegungsmittel (581; 591) zur Bewegung der Blende (580) umfasst,
- wobei die obere Öffnung (508) des Schachts (506) durch die Blende (580) wenigstens teilweise verschließbar ist,
- wobei die Blende (580) von den Bewegungsmitteln (581; 591) vertikal verfahrbar ist,
- wobei die Blende (580) einen Durchbruch (584) umfasst,
- wobei der Durchbruch (584) auf die seitliche Öffnung (519) des Behälters (507) derart angepasst ist, dass immer dann, wenn der Durchbruch (584) und die seitliche Öffnung (519) des Behälters (507) aufeinander ausgerichtet sind, Fische (502) durch einen durch den Durchbruch (584) und die Öffnung (519) gebildeten Kanal (K502) schwimmen können,
- wobei die obere Öffnung (508) des Schachts (506) eine derartige Höhe (H508) aufweist, dass sich diese bei in einer hohen oberen Stellung (S503h) stehendem Behälter (507) bis unter eine Unterseite (507u) des Behälters (507) erstreckt,
- wobei die Blende (580) abhängig von einem Wasserstand (N5031; N5032) des Oberwassers (503) zwischen einer Hochwasserstellung (HWS) und einer Niedrigwasserstellung (NWS) verfahrbar ist,
- wobei die Blende (580) mit einer Höhe (H580) derart auf die obere Öffnung (8) des Schachts (6) angepasst ist, dass diese auch in ihrer Hochwasserstellung (HWS), bei welcher der Behälter (507) in seine hohe obere Stellung (S503h) verfahrbar ist nach unten derart über den in seiner hohen oberen Stellung (S503h) stehenden Behälter (507) übersteht, dass die obere Öffnung (508) des Schachts (506) durch die Blende (580) zu einem Innenraum (522) des Schachts (506) verschlossen ist.

2. Fischlift nach Anspruch 1, **dadurch gekennzeichnet, dass** die Blende (580) zwischen dem Behälter (507) und einer Innenwand (522a) des Schachts (506) angeordnet ist.

3. Fischlift nach Anspruch 1, **dadurch gekennzeichnet, dass** die Blende (580) an einer Außenwand (522b) des Schachts (506) angeordnet ist.

4. Fischlift nach Anspruch 1, **dadurch gekennzeichnet, dass** die Blende (580) in einer Wandung (518) des Schachts (506) angeordnet und geführt ist.

5. Fischlift nach wenigstens einem der vorhergehenden Ansprüche, **dadurch gekennzeichnet, dass** die Blende (580) an wenigstens einer Schiene geführt ist.

6. Fischlift nach wenigstens einem der vorhergehenden Ansprüche, **dadurch gekennzeichnet, dass** die Blende (580) einen Anschlag (585) für den Behälter (507) bildet, welcher den Behälter (507) an einer weiteren Hubbewegung hindert.

7. Fischlift nach wenigstens einem der vorhergehenden Ansprüche, **dadurch gekennzeichnet, dass** das Bewegungsmittel (581; 591) einen in Abhängigkeit vom Stand (5031; N5032) des Oberwassers (503) gesteuerten Aktor umfasst, welcher die Blende (580) mit bei steigendem Oberwassers (503) anhebt und bei fallendem Oberwassers (503) absenkt.

8. Fischlift nach Anspruch 7, **dadurch gekennzeichnet, dass** der Aktor als elektrisch oder pneumatisch oder hydraulisch angetriebener Zylinder (583) ausgebildet ist und dass das Bewegungsmittel (581) einen Sensor zur Erfassung des Niveaus des Oberwassers (503) sowie eine Kontrolleinrichtung umfasst.

9. Fischlift nach Anspruch 7, **dadurch gekennzeichnet, dass** der Aktor als Schwimmer (593) ausgebildet ist und ein mit der Blende (580) verbundenes Gestänge (596) umfasst, mittels welchem die Blende (580) mit dem Schwimmer (593) bewegbar ist.

## Claims

1. Fish lift (501, 1) for transporting fish (502, 2) between an upper water (503, 3) of a barrage (504, 4) and a lower water of the barrage (504, 4), comprising
- a hoistway (506, 6) and a container (507, 7),
- wherein the hoistway (506, 6) comprises an upper opening (508, 8) leading into the upper water (503, 3), comprising an upper sluice outlet (509, 9) which can be closed by an upper slider (555, 55),
- wherein the hoistway (506, 6) comprises a lower opening (10) leading into the lower water (5), which has a lower sluice inlet (11),
- wherein the container (507, 7) can be displaced between an upper position (S503h, S503n; S3) and a lower position (S5) and comprises at least one lateral opening (519, 19), and
- wherein the container (507, 7) is designed as a floating container (559; 59), which assumes positions (S503h, S503n, S535; S3, S5, S35) of same in the hoistway (506, 6) according to a present hoistway water level (W522-2, W522-31, W522-32; W22-1, W22-2, W22-3) in the hoistway (506, 6),
**characterised in that**
- the fish lift comprises a screen (580) and displacement means (581, 591) for displacing the screen (580),
- wherein the upper opening (508) of the hoistway (506) can at least partially be closed by means of the screen (580),
- wherein the screen (580) can be displaced vertically by the displacement means (581, 591),
- wherein the screen (580) comprises a passage (584),
- wherein the passage (584) is adapted to the lateral opening (519) of the container (507) such that whenever the passage (584) and the lateral opening (519) of the container (507) are oriented with each other, fish (502) can swim through a channel (K502) formed by the passage (584) and the opening (519),
- wherein the upper opening (508) of the hoistway (506) has such a height (H508) that same extends to below a bottom side (507u) of the container (507) when the container (507) is in a high upper position (S503h),
- wherein the screen (580) according to a water level (N5031; N5032) of the upper water (503) can be displaced between a high water position (HWS) and a low water position (NWS),
- wherein the screen (580) with a height (H580) is adjusted to the upper opening (8) of the hoistway (6) such that same also in the high water position thereof (HWS), during which the container (507) can be displaced into the high upper position (S503h), protrudes downwards over the container (507) standing in the high upper position (S503h) thereof such that the upper opening (508) of the hoistway (506) is closed with respect to the inner space (522) of the hoistway (506) by the screen (580).

2. A fish lift according to claim 1, **characterised in that** the screen (580) is arranged between the container (507) and an inner wall (522a) of the hoistway (506).

3. A fish lift according to claim 1, **characterised in that** the screen (580) is arranged on an outer wall (522b) of the hoistway (506).

4. A fish lift according to claim 1, **characterised in that** the screen (580) is arranged and guided on a wall (518) of the hoistway (506).

5. A fish lift according to at least one of the preceding claims, **characterised in that** the screen (580) is guided on at least one rail.

6. A fish lift according to at least one of the preceding claims, **characterised in that** the screen (580) forms a stop (585) for the container (507), which prevents the container (507) from performing another lifting movement.

7. A fish lift according to at least one of the preceding claims, **characterised in that** the displacement means (581, 591) comprises an actuator controlled according to the level (5031; N5032) of the upper water (503), which actuator lowers the screen (580) when the upper water (503) rises and when the upper water (503) falls.

8. A fish lift according to claim 7, **characterised in that** the actuator is designed as an electrically or pneumatically or hydraulically driven cylinder (583) and that the displacement means (581) comprises a sensor for detecting the level of the upper water (503) and a control device.

9. A fish lift according to claim 7, **characterised in that** the actuator is designed as a float (593) and comprises a rod (596) connected to the screen (580), by means of which rod the screen (580) can be displaced with the float (593).

## Revendications

1. Ascenseur pour poissons (501 ; 1) pour le transport de poissons (502 ; 2) entre un cours amont (503 ; 3) d'un barrage (504 ; 4) et un cours aval du barrage (504 ; 4) comprenant
- un puits (506 ; 6) et un récipient (507 ; 7),
- le puits (506 ; 6) comprenant une ouverture supérieure (508 ; 8) menant dans le cours amont (503 ; 3) avec une sortie d'écluse (509 ; 9) supérieure pouvant coulisser par le biais d'un coulisseau supérieur (555 ; 55),
- le puits (506 ; 6) comprenant une ouverture inférieure (10) menant dans le cours aval (5) avec une entrée d'écluse inférieure (11),
- le récipient (507 ; 7) étant déplaçable entre une position supérieure (S503h, S503n ; S3) et une position inférieure (S5) et comprenant au moins une ouverture latérale (519 ; 19) et
- le récipient (507 ; 7) étant formé comme un récipient flottant (559 ; 59), qui occupe ses positions (S503h, S503n, S535 ; S3, S5, S35) dans le puits (506 ; 6) en fonction d'un niveau de l'eau de puits (W522-2, W522-31, W522-32 ; W22-1, W22-2, W22-3) disponible dans le puits (506 ; 6),
**caractérisé en ce**
- **que** l'ascenseur pour poissons comprend un diaphragme (580) et un moyen de déplacement (581 ; 591) pour le déplacement du diaphragme (580),
- l'ouverture supérieure (508) du puits (506) pouvant être fermée au moins partiellement par le diaphragme (580),
- le diaphragme (580) pouvant être déplacé à la verticale par le moyen de déplacement (581 ; 591),
- le diaphragme (580) comprenant une percée (584),
- la percée (584) étant adaptée à l'ouverture latérale (519) du récipient (507) de telle sorte que lorsque la percée (584) et l'ouverture latérale (519) du récipient (507) sont alignées entre elles, les poissons (502) peuvent toujours nager à travers un canal (K502) formé par la percée (584) et l'ouverture (519),
- l'ouverture supérieure (508) du puits (506) présentant une hauteur (H508) telle qu'elle s'étend, lorsque le récipient (507) se trouve dans une position supérieure élevée (S503h), jusqu'à une face inférieure (507u) du récipient (507),
- le diaphragme (580) pouvant être déplacé en fonction d'un niveau d'eau (N5031 ; N5032) du cours amont (503) entre une position d'eau élevée (HWS) et une position d'eau basse (NWS),
- le diaphragme (580), avec une hauteur (H580) adaptée à l'ouverture supérieure (8) du puits (6), de manière à, également dans sa position d'eau élevée (HWS), dans laquelle le récipient (507) peut être déplacé dans sa position supérieure élevée (S503h), dépasser vers le bas au-dessus du récipient (507) se trouvant dans sa position supérieure élevée (S503h), de sorte que l'ouverture supérieure (508) du puits (506) soit fermée par le diaphragme (580) pour former un espace interne (522) du puits (506).

2. Ascenseur pour poissons selon la revendication 1, **caractérisé en ce que** le diaphragme (580) est disposé entre le récipient (507) et une paroi interne (522a) du puits (506).

3. Ascenseur pour poissons selon la revendication 1, **caractérisé en ce que** le diaphragme (580) est disposé dans une paroi externe (522b) du puits (506).

4. Ascenseur pour poissons selon la revendication 1, **caractérisé en ce que** le diaphragme (580) est disposé et guidé dans une paroi (518) du puits (506).

5. Ascenseur pour poissons selon au moins une des revendications précédentes, **caractérisé en ce que** le diaphragme (580) est guidé sur au moins un rail.

6. Ascenseur pour poissons selon au moins une des revendications précédentes, **caractérisé en ce que** le diaphragme (580) forme une butée (585) pour le récipient (507), qui empêche le récipient (507) d'effectuer un mouvement d'élévation supplémentaire.

7. Ascenseur pour poissons selon au moins une des revendications précédentes, **caractérisé en ce que** le moyen de déplacement (581 ; 591) comprend un actionneur commandé en fonction du niveau (5031 ; N5032) du cours amont (503), qui élève le diaphragme (580) lorsque le cours amont (503) augmente et l'abaisse lorsque le cours amont (503) diminue.

8. Ascenseur pour poissons selon la revendication 7, **caractérisé en ce que** l'actionneur prend la forme d'un cylindre (583) à entraînement électrique ou pneumatique ou hydraulique et **en ce que** le moyen de déplacement (581) comprend un capteur destiné à déterminer le niveau du cours amont (503) ainsi qu'un dispositif de commande.

9. Ascenseur pour poissons selon la revendication 7, **caractérisé en ce que** l'actionneur prend la forme d'un flotteur (593) et comprend une tringle (596) reliée au diaphragme (580), au moyen de laquelle le diaphragme (580) peut être déplacé avec le flotteur (593).
